# EUROPÄISCHE PATENTSCHRIFT

(11) **EP 2 612 053 B1**
(45) Veröffentlichungstag und Bekanntmachung des Hinweises auf die Patenterteilung: **04.06.2014**
(21) Anmeldenummer: 11729112.0
(22) Anmeldetag: 30.06.2011
(51) Int. Cl.: F16H 7/08, F16H 7/12

(54) **EXZENTER-SPANNROLLE**
ECCENTRIC IDLER PULLEY
POULIE DE TENSION À EXCENTRIQUE

(30) Priorität: 03.09.2010 DE 102010036253
(43) Veröffentlichungstag der Anmeldung: 10.07.2013
(73) Patentinhaber: Schaeffler Technologies GmbH & Co. KG, 91074 Herzogenaurach (DE)
(72) Erfinder: MENNERAT, Thomas, 91074 Herzogenaurach (DE); SPÖRL, Susanne, 91301 Forchheim (DE)
(86) Internationale Anmeldenummer: PCT/EP2011/061019
(87) Internationale Veröffentlichungsnummer: WO 2012/028354

(56) Entgegenhaltungen:
- DE-A1- 19 535 966
- US-A- 5 470 279
- US-B1- 6 416 435
- US-B1- 6 659 896

## Beschreibung

Die vorliegende Erfindung betrifft eine Spannrolle eines Zugmitteltriebs, an dem ein Zugmittel wie Riemen oder Kette geführt ist. Zur Verstellung oder Einstellung der Spannrolle ist ein Einstellexzenter vorgesehen, über den in Verbindung mit einem ortsfesten Befestigungsmittel die Spannrolle in unterschiedlichen Positionen an einem Maschinenteil befestigt werden kann.

Spannrollen oder Umlenkrollen von Zugmitteltrieben sind dazu bestimmt, eine vorgegebene Vorspannung des Zugmittels sowie einen möglichst schlupffreien Riementrieb zu gewährleisten. Derartige Spannrollen oder Umlenkrollen werden folglich auch als Umlenkeinheit bezeichnet.

In Brennkraftmaschinen sind Zugmitteltriebe als Zahnriementriebe zum Antrieb von Nockenwellen oder als Keilriementriebe zum Antrieb von Nebenaggregaten bekannt. Spann- oder Umlenkrollen bzw. Umlenkeinheiten bilden wichtige Elemente dieser Zugmitteltriebe. Eine Aufgabe dieser Bauteile besteht darin, eine Mindestumschlingung des Zugmittels an den Riemenscheiben zu gewährleisten zur Erzielung eines möglichst schlupffreien Antriebs. Weiterhin werden Umlenkelemente eingesetzt, um ein definiertes Zugmittellayout darzustellen, wodurch das Zugmittel entsprechend einer durch die Konstruktion der Brennkraftmaschine vorgegebenen Kontur geführt werden kann.

Aus der DE 100 43 840 A1 ist eine Umlenkrolle oder Spannrolle bekannt, bestehend aus einem Wälzlager, in dessen Innenring eine Verschraubung zur Befestigung eingesetzt ist, die weiterhin durch eine einen axialen Abstand der Umlenkrolle zu einem Gehäuse der Brennkraftmaschine bestimmenden Distanzhülse geführt ist. Das Wälzlager ist außenseitig von einer aus Kunststoff hergestellten Laufscheibe umschlossen, die auch als Laufmantel bezeichnet werden kann. Die Laufscheibe ist über eine Nabe formschlüssig an einem Außenring des Wälzlagers befestigt. Im eingebauten Zustand der Umlenk- oder Spannrolle ist das Zugmittel des Zugmitteltriebs an der Laufscheibe geführt.

Weiterhin sind Spannrollen für Zugmitteltriebe bekannt, bei denen die Einstellung mittels einer rotatorischen Verlagerung der Spannrollen-Drehachse um eine innerhalb des Außendurchmessers der Spannrolle eingebrachte Schwenkachse erfolgt.

Gattungsgemäße Riementriebe sind aus der US 6 659 896 B1 und aus der US 5 470 279 A bekannt. Die DE 195 35 966 A1 offenbart eine Spannrolle, an der ein Riemen geführt ist. Die Spannrolle ist über einen Einstellexzenter verstellbar und kann mit einem Befestigungsmittel an einem Maschinenteil befestigt werden. Zur Bildung einer Fixiereinrichtung in einer Endlage ist der Einstellexzenter der Spannrolle über einen Ansatz an einem Anschlag des Maschinenteils abgestützt.

Es ist Aufgabe der Erfindung, eine exzentrisch einstellbare Spannrolle in definierten Positionen zu fixieren.

Zur Lösung dieser Problemstellung ist erfindungsgemäß nach Anspruch 1 eine Fixiereinrichtung vorgesehen, mit der zumindest eine Endlage der Spannrolle definiert werden kann. Die gemeinsam von dem Einstellexzenter und dem Befestigungsmittel gebildete Fixiereinrichtung umfasst zumindest einen radial oder axial ausgerichteten Ansatz, der mit zumindest einem Anschlag des zugehörigen weiteren Bauteils zusammenwirkt. Das erfindungsgemäße Konzept ermöglicht es, die Spannrolle in unterschiedlichen Positionen zu fixieren, bspw. um die Montage des Zugmittels zu vereinfachen oder in einer Betriebsnennstellung einen funktionssicheren Endanschlag zwischen dem Einstellexzenter und dem Befestigungsmittel zu realisieren. Die erfindungsgemäße, eine hohe Funktionalität beinhaltende Fixiereinrichtung ist kostengünstig herstellbar und einfach montierbar und bietet damit insgesamt eine kostengünstige Lösung.

Gemäß einer vorteilhaften Ausgestaltung der Erfindung ist zur Darstellung der Fixiereinrichtung dem Befestigungsmittel ein radialer Ansatz zugeordnet, der mit zwei zueinander winkelversetzt angeordneten Anschlägen des Einstellexzenters zusammenwirkt, um eine definierte Endlage der Spannrolle festzulegen. Bevorzugt sind dem radialen Ansatz des Befestigungsmittels zwei winkelversetzt zueinander an dem Einstellexzenter positionierte Anschläge zugeordnet, deren Lage gleichzeitig den Verstellbereich der Spannrolle definiert. Eine weitere Einflussnahme auf den Verstellbereich der Spannrolle bzw. deren Endlage kann über die Formgebung, das Winkelmaß des radialen Ansatzes des Befestigungsmittels erfolgen.

Eine alternativ gestaltete Fixiereinrichtung umfasst ein Befestigungsmittel mit einem axial ausgerichteten Ansatz, der formschlüssig in eine Ringnut des Einstellexzenters eingreift. Dabei bietet es sich an, die Endbereiche der Ringnut gleichzeitig als Anschlag auszubilden. Die ein Kreisbogensegment bildende Ringnut erstreckt sich über ein Winkelmaß, das den maximalen Verstellbereich des Einstellexzenters und damit der Spannrolle definiert.

Als ein bevorzugtes Befestigungsmittel ist eine Verschraubung vorgesehen, die gemeinsam mit einer Führungsbuchse in einer außermittig im Einstellexzenter eingebrachten Längsbohrung eingesetzt ist, wobei ein Bord der Führungsbuchse einen mit dem Anschlag des Einstellexzenters zusammenwirkenden radialen Ansatz aufweist.

Alternativ zu einer Führungsbuchse bietet es sich beispielsweise an, die erfindungsgemäße Fixiereinrichtung unmittelbar zwischen der Verschraubung und dem Einstellexzenter vorzusehen. Gemäß einer bevorzugten Ausführung umfasst die Verschraubung, insbesondere der Schraubenkopf, einen radialen Ansatz der formschlüssig in eine zumindest einen Anschlag bildende Aussparung des Einstellexzenters eingreift.

Zur Darstellung einer der Betriebsnennstellung entsprechenden Endlage der Spannrolle ermöglicht die Fixiereinrichtung eine Einstellung, bei der sich zwischen einer durch die Drehachse der Spannrolle und der Schwenkachse des Einstellexzenters verlaufenden Achse und einer durch die Drehachse der Spannrolle gerichteten resultierenden Riemenkraft F_{R} des Zugmittels ein wirksamer Hebelarm S > 0 einstellt. Vorteilhaft ist dabei der Ansatz des Einstellexzenters kraft- und/oder formschlüssig an dem Anschlag des Befestigungsmittels abgestützt, wodurch sich eine funktionsoptimierte Einstellung der Spannrolle im Betriebszustand ergibt.

In einer für die Montage des Zugmittels bestimmten Endlage bietet die erfindungsgemäße Fixiereinrichtung die Möglichkeit, dass sich ein Hebelarm S > 0 einstellt zwischen einer ersten einer Schwenkachse des Einstellexzenters zugeordneten Vertikalachse A und einer zweiten der Drehachse der Spannrolle zugeordneten Vertikalachse B. Damit kann während der Montage des Zugmittels vorteilhaft eine stabile Endlage der Spannrolle realisiert werden.

Der erfindungsgemäße Aufbau der Fixiereinrichtung sieht weiterhin vor, dass sich in einer Totpunktstellung eine Lageübereinstimmung zwischen der Schwenkachse des Einstellexzenters, der Drehachse der Spannrolle und der Kraftrichtung einer resultierenden Zugmittelkraft ergibt. Folglich stellt sich in dieser Position kein wirksamer Hebelarm zwischen der Schwenkachse des Einstellexzenters oder der Drehachse der Spannrolle und der Richtung der resultierenden Riemenkraft ein. Zur Realisierung einer für die Funktion optimalen, der Betriebsnennstellung der Spannrolle entsprechenden Endlage ist zwischen der Totpunktstellung und einer Position, in der der Ansatz des Befestigungsmittels an dem Anschlag des Einstellexzenters abgestützt ist, ein Winkel β ≥ 20° vorgesehen.

Es ist vorgesehen, dass der Einstellexzenter der Spannrolle in einer Endlage unmittelbar oder mittelbar über einen radialen Ansatz mit einem Anschlag des ortsfesten Maschinenteils zusammenwirkt. Bevorzugt ist dazu das Maschinenteil vorgesehen, an dem die Spannrolle über das Befestigungsmittel fixiert ist.

Die erfindungsgemäße Spannrolle kann alternativ zu einer Umlenkeinheit wie Spann-oder Umlenkrolle weiterhin als Spannrolle eines Spannsystems eingesetzt werden, mit dem das Zugmittel eines Zugmitteltriebs selbsttätig vorgespannt werden kann.

Für den Einstellexzenter ist zwischen der Montagestellung und der Betriebsnennstellung ein bevorzugter Verstellbereich α ≥ 150° vorgesehen ist.

Der Aufbau der erfindungsgemäßen Spannrolle umfasst eine über ein Wälzlager drehbar auf dem Einstellexzenter angeordnete Laufscheibe, wobei der Einstellexzenter über ein Befestigungsmittel an dem Maschinenteil befestigt ist. Zur Vereinfachung der Spannrollenmontage ist ein Befestigungsmittel vorgesehen, das im Einbauzustand an dem Maschinenteil drehfixiert ist. Dazu bietet sich z.B. ein radial zur Befestigung der Verschraubung versetzter, lokal vorspringender Ansatz an, über den das Befestigungsmittel formschlüssig in eine korrespondierende Aufnahme des Maschinenteils eingreift.

### Kurze Beschreibung der Zeichnungen

Weitere Maßnahmen der Erfindung werden nachfolgend im Zusammenhang mit der Beschreibung eines bevorzugten Ausführungsbeispiels näher erläutert. Es zeigt:
- Fig. 1: in einer Schnittdarstellung eine Spannrolle mit einer erfindungsgemäßen Fixiereinrichtung;
- Fig. 2: eine Spannrolle in der Vorderansicht mit Einstellexzenter und zugehöriger Fixiereinrichtung in einer Montageposition;
- Fig. 3: die Spannrolle gemäß Figur 2 mit der Fixiereinrichtung in einer Totpunktlage;
- Fig. 4: den Einstellexzenter gemäß Figur 2 mit der Fixiereinrichtung in einer Betriebsstellung;
- Fig. 5: eine Spannrolle, bei der die Fixiereinrichtung zwischen dem Einstellexzenter und dem Maschinenteil vorgesehen ist.

### Detaillierte Beschreibung der Zeichnungen

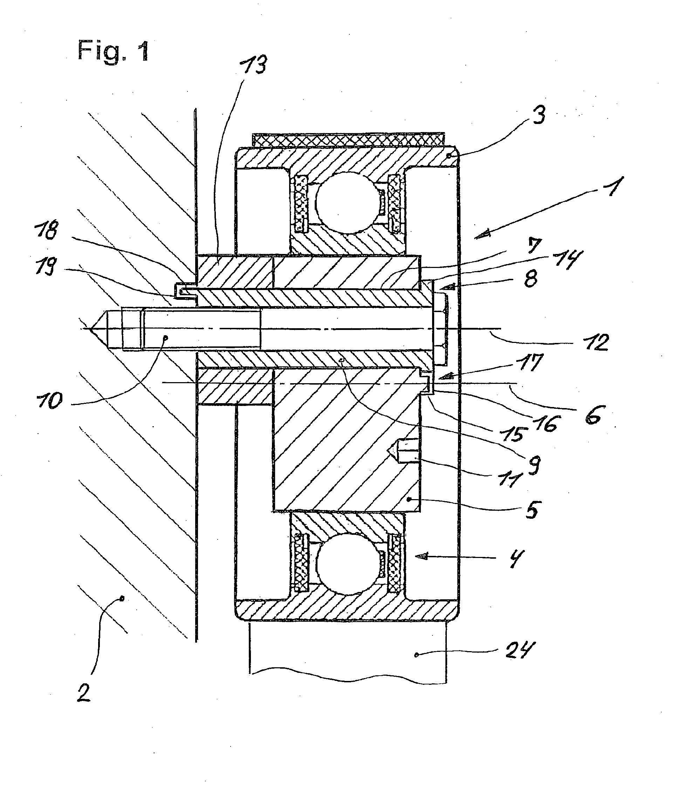

Die Figur 1 zeigt eine Spannrolle 1, Umlenkrolle oder Umlenkeinheit im Einbauzustand, die mit einem Zugmittel 24 in Wirkverbindung steht, das einem in Figur 1 nicht abgebildeten Zugmitteltrieb zugeordnet ist. Die Spannrolle 1 umfasst eine zumindest bereichsweise von dem Zugmittel umschlossene Laufscheibe 3, die über ein Wälzlager 4 auf einem Einstellexzenter 5 drehbar angeordnet ist. Radial versetzt zu einer Drehachse 6 der Spannrolle 1 ist in einer Längsbohrung 7 des Einstellexzenters ein Befestigungsmittel 8 eingesetzt, bestehend aus einer an einem Maschinenteil 2 abgestützten Führungsbuchse 9 und einer im Maschinenteil 2 eingeschraubten Verschraubung 10. Bei einer gelösten Verschraubung 10 ist der Einstellexzenter 5, z.B. in Verbindung mit einem in einer Werkzeugaufnahme 11 einsetzbaren Einstellwerkzeug um eine Schwenkachse 12 des Befestigungsmittels 8 einstellbar. Zur Einstellung eines axialen Abstandes der Spannrolle 1 zu dem Maschinenteil 2 ist eine die Führungsbuchse 9 umschließende Distanzhülse 13 vorgesehen. Auf der vom Maschinenteil 2 abgewandten Seite bildet die Führungsbuchse 9 einen umlaufenden Bord 14 mit einem lokal radial nach außen gerichteten Ansatz 15. Zusammen mit einem axial vorstehenden Anschlag 16 des Einstellexzenters 5 bildet der Ansatz 15 eine Fixiereinrichtung 17, die eine Einstellung bzw. Verstellung des Einstellexzenters 5 begrenzt. Zur Drehfixierung schließt die Führungsbuchse 9 einen Fixierstift 18 ein, der in eine korrespondierende Aussparung 19 des Maschinenteils 2 formschlüssig eingreift.

Die erfindungsgemäße Fixiereinrichtung ist alternativ zu Figur 1 auch unmittelbar zwischen der Verschraubung 10 und dem Einstellexzenter 5 und damit ohne eine Führungshülse 9 realisierbar. Dazu bietet es sich beispielsweise an, dass ein Schraubenkopf der Verschraubung 10 mit einem radialen Ansatz formschlüssig in einen Bereich zwischen zwei beabstandeten, axial vorstehenden, Anschläge bildenden Ansätzen des Einstellexzenters 5 eingreift.

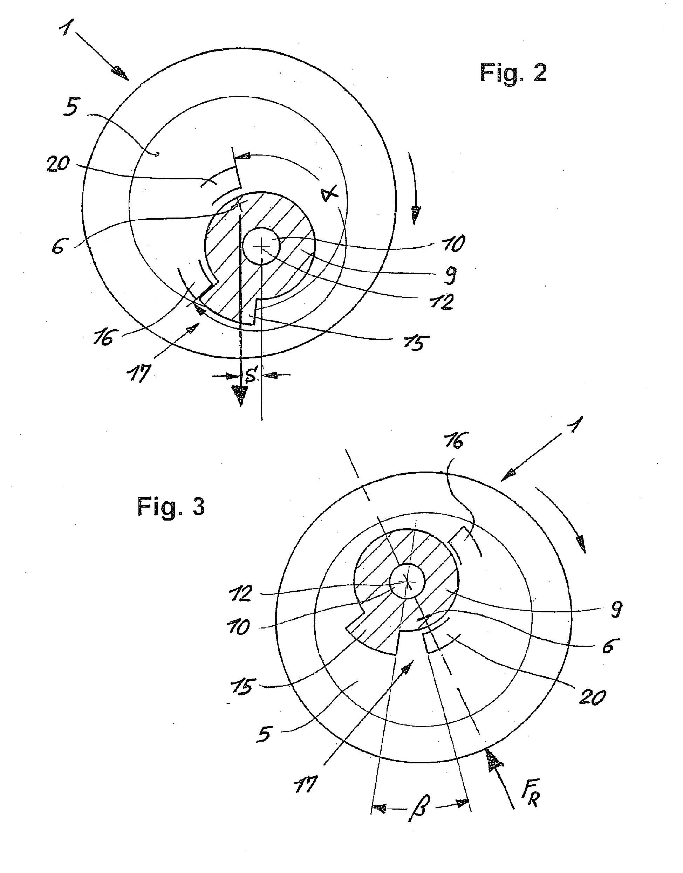

Die Figur 2 zeigt die um die Schwenkachse 12 des Einstellexzenters 5 in eine Endlage, eine Montageposition gedrehte Spannrolle 1, in der das Zugmittel, der Riemen einfacher montierbar ist. In dieser Position ist der Ansatz 15 der Führungsbuchse 9 an dem Anschlag 16 abgestützt. In dieser Spannrollenlage bildet sich ein Hebelarm S > 0 zwischen einer durch die Schwenkachse 12 geführten Vertikalachse A und einer Vertikalachse B der Drehachse 6, der aufgrund des Eigengewichts der Spannrolle 1 einen Drehimpuls im Gegenuhrzeigersinn auslöst, wodurch der Anschlag 16 kraftschlüssig an dem Ansatz 15 abgestützt ist zur Schaffung einer stabilen Lage. Nach erfolgter Riemenmontage kann der Einstellexzenter 5 und folglich die Spannrolle 1 in Pfeilrichtung, im Uhrzeigersinn verdreht werden, zur Einstellung einer gewünschten Vorspannung des Zugmittels. Der maximale Verstellwinkel α ≥ 150° des Einstellexzenters 5, reduziert um das Breitenmaß des Ansatzes 15, wird durch einen weiteren Anschlag 20 des Einstellexzenters 5 begrenzt.

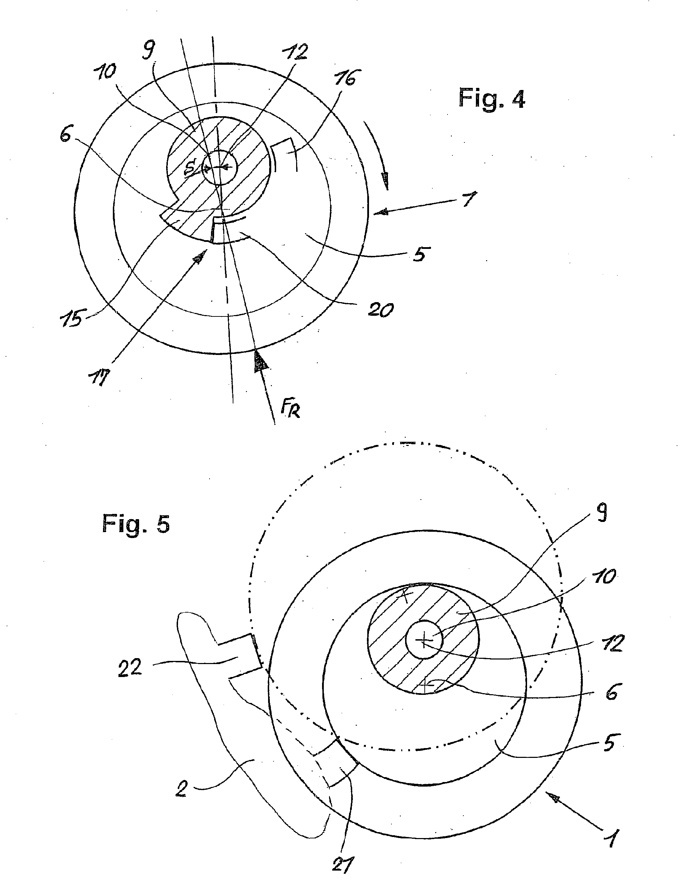

Die Fig. 3 und 4 zeigen alternative Einstellungen des Einstellexzenters 5. Dabei gilt, dass Einzelheiten und Bereiche, die äquivalente Funktionen zu vorab beschriebenen Einzelheiten und Bereichen aufweisen, mit gleichen Bezugsziffern versehen sind und nicht nochmals detailliert erläutert werden.

Die Figur 3 zeigt eine Totpunktlage des Einstellexzenters 5, die durch Verdrehen des Einstellexzenters 5 im Uhrzeigersinn erreichbar ist, bis sich eine Lageübereinstimmung zwischen der Schwenkachse 12, der Drehachse 6 und einer Kraftrichtung der resultierenden Riemenkraft F_{R} oder Zugmittelkraft einstellt. In dieser Position des Einstellexzenters 5 ergibt sich ein Winkel β ≥ 20° zwischen dem Anschlag 20 des Einstellexzenters 5 und dem Ansatz 15.

In der Betriebsnennstellung der Spannrolle 1 gemäß Figur 4 ist der Anschlag 20 des Einstellexzenters 5 an dem Ansatz 15 der Führungsbuchse 9 abgestützt. In dieser Endlage bildet sich ein wirksamer Hebelarm S > 0 zwischen der durch die Drehachse 6 der Spannrolle 1 verlaufenden Kraftrichtung der resultierenden Riemenkraft F_{R} gegenüber einer durch die Schwenkachse 12 des Einstellexzenters 5 sowie der Drehachse 6 des Einstellexzenters 5 verlaufenden Längsachse. Aufgrund dieser geometrischen Anordnung ist in der Betriebsnennstellung zur Schaffung einer stabilen Lage der Anschlag 20 kraftschlüssig an dem Ansatz 15 abgestützt.

Alternativ zu dem beschriebenen vorherigen Ausführungsbeispiel zeigt die Figur 5 die Spannrolle 1, deren Fixiereinrichtung 21 dem Maschinenteil 2 zugeordnete Anschläge 22,23 umfasst, die unmittelbar mit dem Einstellexzenter 5 zusammenwirken. Die Abstützung des Einstellexzenters 5 am Anschlag 21 entspricht der Betriebsnennstellung. In der weiteren strichpunktiert dargestellten Montageposition ist der Einstellexzenter 5 an dem Anschlag 22 abgestützt.

### Bezugszahlenliste

- 1: Spannrolle
- 2: Maschinenteil
- 3: Laufscheibe
- 4: Wälzlager
- 5: Einstellexzenter
- 6: Drehachse
- 7: Längsbohrung
- 8: Befestigungsmittel
- 9: Führungsbuchse
- 10: Verschraubung
- 11: Werkzeugaufnahme
- 12: Schwenkachse
- 13: Distanzhülse
- 14: Bord
- 15: Ansatz
- 16: Anschlag
- 17: Fixiervorrichtung
- 18: Fixierstift
- 19: Aussparung
- 20: Anschlag
- 21: Fixiereinrichtung
- 22: Anschlag
- 23: Anschlag
- 24: Zugmittel

## Patentansprüche

1. Riementrieb, umfassend einen Riemen (24), eine den Riemen (24) führende Spannrolle (1), einen Einstellexzenter (5), über den die Spannrolle (1) verstellbar ist, und ein Befestigungsmittel (8), mit dem die Spannrolle (1) an einem Maschinenteil (2) befestigt werden kann, wobei der Einstellexzenter (5) und das Befestigungsmittel (8) gemeinsam eine Fixiereinrichtung (17) bilden, die eine Endlage des Einstellexzenters (5) und damit der Spannrolle (1) definiert und die einen Ansatz (15) aufweist, an dem in der einen Endlage ein Anschlag (16) des Einstellexzenters (5) abgestützt ist, **dadurch gekennzeichnet, dass** die Spannrolle (1) in der einen Endlage in die Stellung der Riemenmontage gedreht ist, in welcher Montagestellung der Anschlag (16) aufgrund des Eigengewichts der Spannrolle (1) an dem Ansatz (15) abgestützt ist, und dass die Spannrolle (1) in einer weiteren Endlage in die den Riemen (24) vorspannende Betriebsnennstellung gedreht ist, in der ein weiterer Anschlag (20) des Einstellexzenters (5) in stabiler Lage an dem Ansatz (15) abgestützt ist.

2. Riementrieb nach Anspruch 1, **dadurch gekennzeichnet, dass** sich in einer Totpunktstellung der Spannrolle (1) die Schwenkachse (12) des Einstellexzenters (5), die Drehachse (6) der Spannrolle (1) und die Kraftrichtung der resultierenden Kraft F_{R} des Riemens (24) in Lageübereinstimmung befinden, wobei in der Totpunktstellung der weitere Anschlag (20) um einen Winkel β ≥ 20° gegenüber dem Ansatz (15) beabstandet ist.

3. Riementrieb nach Anspruch 1 oder 2, **dadurch gekennzeichnet, dass** ein Verstellbereich α ≥ 150° für den Einstellexzenter (5) zwischen der Montagestellung und der Betriebsnennstellung vorgesehen ist.

## Claims

1. Belt drive, comprising a belt (24), an idler pulley (1) guiding the belt (24), an adjusting eccentric (5), via which the idler pulley (1) can be adjusted, and a fastening means (8), by which the idler pulley (1) can be fastened to a machine part (2), the adjusting eccentric (5) and the fastening means (8) together forming a fixing device (17) which defines one end position of the adjusting eccentric (5) and therefore of the idler pulley (1) and which has an extension (15), on which a stop (16) of the adjusting eccentric (5) is supported in the one end position, **characterized in that,** in the one end position, the idler pulley (1) is rotated into the setting for belt fitting, in which fitting setting the stop (16) is supported on the extension (15) by virtue of the dead weight of the idler pulley (1), and **in that**, in a further end position, the idler pulley (1) is rotated into the nominal operating setting in which the belt (24) is prestressed and in which a further stop (20) of the adjusting eccentric (5) is supported on the extension (15) in a stable position.

2. Belt drive according to Claim 1, **characterized in that,** in a dead-centre setting of the idler pulley (1), the pivot axis (12) of the adjusting eccentric (5), the axis of rotation (6) of the idler pulley (1) and the force direction of the resultant force F_{R} of the belt (24) are in an identical position, in the dead-centre setting the further stop (20) being spaced apart from the extension (15) by an angle β ≥ 20°.

3. Belt drive according to Claim 1 or 2, **characterized in that** an adjustment range α ≥ 150° for the adjusting eccentric (5) between the fitting setting and the nominal operating setting is provided.

## Revendications

1. Entraînement par courroie, comportant une courroie (24), une poulie de tension (1) guidant la courroie (24), un excentrique d'ajustement (5) par le biais duquel la poulie de tension (1) peut être réglée, et un moyen de fixation (8) à l'aide duquel la poulie de tension (1) peut être fixée sur une partie de machine (2), l'excentrique d'ajustement (5) et le moyen de fixation (8) formant conjointement un dispositif de fixation (17) qui définit une position finale de l'excentrique d'ajustement (5), et par conséquent de la poulie de tension (1), et qui comprend un épaulement (15) contre lequel s'appuie une butée (16) de l'excentrique d'ajustement (5) dans l'une des positions finales, **caractérisé en ce que,** dans l'une des positions finales, la poulie de tension (1) est tournée jusqu'à la position de montage de la courroie, dans laquelle position de montage la butée (16) s'appuie contre l'épaulement (15) en raison du poids propre de la poulie de tension (1), et **en ce que**, dans une autre position finale, la poulie de tension (1) est tournée jusqu'à la position de fonctionnement nominale soumettant la courroie (24) à une précontrainte, dans laquelle position de fonctionnement nominale une butée supplémentaire (20) de l'excentrique d'ajustement (5) s'appuie dans une position stable contre l'épaulement (15).

2. Entraînement par courroie selon la revendication 1, **caractérisé en ce que,** dans une position de point mort de la poulie de tension (1), l'axe de pivotement (12) de l'excentrique d'ajustement (5), l'axe de rotation (6) de la poulie de tension (1) et la direction de la force résultante F_{R} de la courroie (24) se trouvent en coïncidence positionnelle, la butée supplémentaire (20) étant, dans la position de point mort, espacée d'un angle β ≥ 20° par rapport à l'épaulement (15).

3. Entraînement par courroie selon la revendication 1 ou 2, **caractérisé en ce qu**' il est prévu une plage de réglage α ≥ 150° pour l'excentrique d'ajustement (5) entre la position de montage et la position de fonctionnement nominale.
